Europäisches Patentamt

European Patent Office

Office européen des brevets

(11) Publication number: **0 054 779**
**B1**

# EUROPEAN PATENT SPECIFICATION

(45) Date of publication of patent specification: 09.10.85

(51) Int. Cl.⁴: **F 16 D 55/224**

(21) Application number: 81110108.8

(22) Date of filing: 03.12.81

(54) Disc brake friction pad bolt locking method.

(30) Priority: 24.12.80 US 219694

(43) Date of publication of application:
30.06.82 Bulletin 82/26

(45) Publication of the grant of the patent:
09.10.85 Bulletin 85/41

(84) Designated Contracting States:
DE FR GB IT SE

(56) References cited:
DE-B-1 725 004
GB-A-1 233 530
GB-A-1 546 862
GB-A-2 006 357
GB-A-2 019 514
US-A-3 464 523
US-A-3 899 052

(73) Proprietor: EATON CORPORATION
100 Erieview Plaza
Cleveland Ohio 44114 (US)

(72) Inventor: Urban, John Arthur
18892 Mayfield
Livonia Michigan (US)
Inventor: Garrett, Wayne Hull
4171 Butternut Hill Dr.
Troy Michigan 48098 (US)

(74) Representative: Wagner, Karl H.
WAGNER & GEYER Patentanwälte
Gewuerzmuehlstrasse 5 Postfach 246
D-8000 München 22 (DE)

## Description

This invention relates to vehicular disc brakes of the sliding caliper type and, more particularly, to a caliper assembly for a sliding caliper disc brake.

In the typical sliding caliper disc brake, the caliper embraces the disc and is slidably supported at its opposite ends by a torque plate fixedly secured to a nonrotating portion of the axle assembly of the associated vehicle. As the brake is applied by the actuator assembly, the inboard brake pad is pressed against the inboard face of the disc, whereafter, with continued driving input from the actuator assembly, the caliper slides inboard on the torque plate to bring the outboard pad into frictional engagement with the outboard face of the disc.

It is important, particularly in heavy-duty truck fleet service, to be able to quickly remove and replace the brake pad assemblies. It is particularly desirable in fleet applications to be able to remove and replace the brake pad assemblies without removing the caliper or the associated wheel hub of the vehicle. In an effort to allow such ready removal, so-called "open back" caliper designs have been developed wherein an opening or window is provided in the back wall of the caliper through which the pad assemblies may be withdrawn directly. Such designs however require bolts or pins to position the pad assembly within the caliper in the window and require that the bolts or pins be totally axially withdrawn before the pad assemblies can be removed. In many heavy-duty truck applications, adjacent equipment, such as the associated wheel structure, severely encroaches on the space available around the brake and precludes complete axial withdrawal of the bolts or pins.

A disc brake caliper assembly according to the Preamble of Claim 1 is shown in U.S. Patent 3,899,052. The caliper assembly includes an open back caliper or yoke having spaced sidewalls positioned on opposite sides of a brake disc with a brake pad assembly disposed between each sidewall and the associated friction face of the brake disc. Radial movement of the brake pad assemblies is prevented by an arrangement including a two-legged bent wire clip having the free ends of the legs slidably received in openings in one of the sidewalls and the other ends secured to the back face of the yoke by a bolt. This arrangement allows ready removal of the brake pad assemblies through the open back of the caliper or yoke in response to limited movement sufficient to withdrawn the free ends of the wire clip from the openings in the one sidewall.

An object of the present invention is to provide an improved disc brake caliper assembly wherein, despite severe encroachment of adjacent vehicular equipment, the brake pad assemblies may be removed and replaced without removal of the encroaching equipment.

The caliper assembly is of the type wherein an elongated fastener member positions the brake pad assemblies between spaced sidewalls of a caliper member on opposite sides of the disc, wherein the arcuate back wall of the caliper member has an opening therein of sufficient size to allow the brake pad assemblies to pass radially outward through the opening for removal and replacement, and wherein means are provided on the spaced sidewalls of the caliper which normally preclude radial movement of the fastener member relative to the caliper member but which are operative in response to limited axial movement of the fastener member to allow the fastener member to be moved, in assembly with the brake pad assemblies supported thereby, radially outward relative to the caliper member with the brake pad assemblies moving radially outwardly through the opening in the back wall of the caliper member.

The inventive portion of the caliper assembly is characterized in that said elongated fastener member includes a washerhead; said fastening means include an axial slot in the other sidewall receiving another portion of the fastener member and opening at the radially outer circumferential edge of the other sidewall, and an axial counterbore in the outer face of the other sidewall receiving the washerhead portion of the fastener member; said axial slot having a width slightly greater than that of the elongated fastener member; and whereby the limited axial movement of the fastener member respectively withdraws the one portion of the fastener member from the bore and the washerhead from the counterbore to allow radially outwardly movement of the fastener member through the slot to facilitate removal of the brake pad assemblies in assembly with the fastener member through the opening in the back wall of the caliper member.

An advantage of the invention resides in the fact that the fastener member formed by a threaded bolt strengthens the caliper member.

Further embodiments of the invention are disclosed in the dependent claims.

In the disclosed embodiment of the invention, the fastener member comprises a washerhead bolt and the means on the spaced sidewalls of the caliper receiving the bolt comprise a throughbore in one sidewall passing the threaded free end of the bolt, a slot in the other sidewall opening at the radially outer circumferential edge of that sidewall and receiving another portion of the bolt, and a counterbore in the outer face of that sidewall receiving the washerhead portion of the bolt. With this arrangement, the pad assemblies may be removed for replacement simply by moving the bolt axially through a distance sufficient to allow the free end of the bolt to be withdrawn from the throughbore in the one sidewall and allow the washerhead portion to be withdrawn from the counterbore in the other sidewall, whereupon the bolt and brake pad assembly may be moved radially outwardly with the bolt shaft portion adjacent the head passing radially outwardly through the slot in the other sidewall and the remainder of the bolt, together with the pad assemblies carried thereby passing radially outwardly through the opening in the back wall of the caliper.

The invention will become apparent from the following detailed description of a preferred embodiment of the invention and from the accompanying drawings.

FIGURE 1 is a somewhat schematic partially fragmentary view of the vehicular disc brake assembly embodying the invention caliper assembly;

FIGURE 2 is a view looking in the direction of the arrow 2 in Figure 1;

FIGURE 3 is a perspective exploded view of the invention caliper assembly; and

FIGURE 4 is a fragmentary view of a portion of the invention caliper assembly looking in the direction of the arrow 4 in Figure 2.

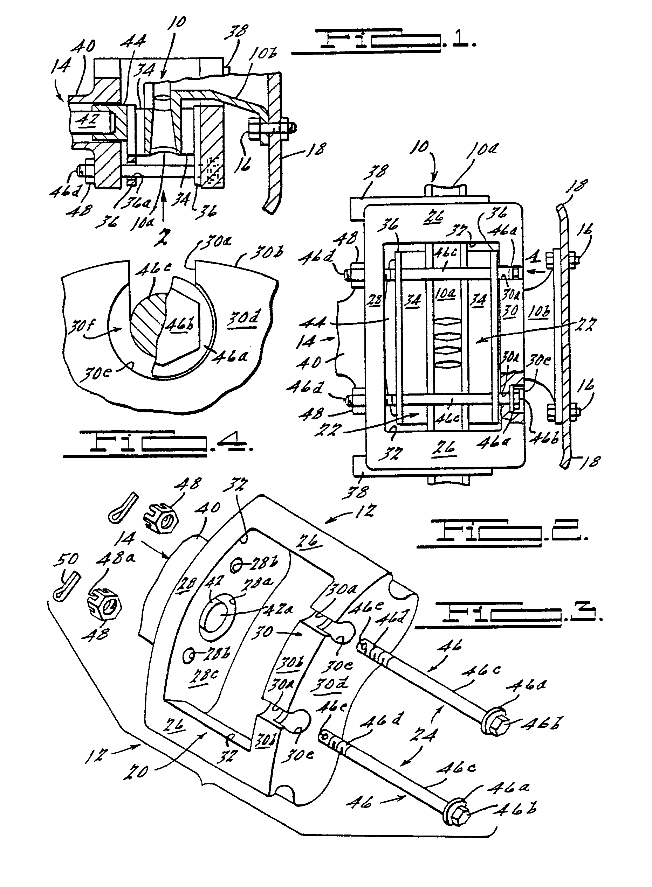

The disc brake assembly of Figure 1 includes a disc 10, a caliper assembly 12, and an actuator assembly 14.

Disc 10 includes a brake ring portion 10a and a flange portion 10b secured as by bolts 16 to a wheel 18 of an associated vehicle.

Caliper assembly 12 includes a caliper 20, a pair of brake pad assemblies 22, and a pair of fastener assemblies 24. Caliper 20 is preferably formed as a unitary ferrous casting. Caliper 20, in transverse cross section, has a C-shaped configuration and circumferentially embraces an arcuate portion of ring portion 10a of disc 10. Caliper 20 includes an arcuate central (or back) wall portion 26 lying on an arc centered on the central axis of disc 10 and inboard and outboard sidewall or web portions 28 and 30. Outboard sidewall portion 30 has a smaller inner radial dimension than inboard sidewall portion 28 to facilitate clearance of disc 10 (Figure 1). Caliper 20 is of the "open back" type. That is, the "back" wall portion 26 of the caliper is "open" as at 32.

Each brake pad assembly includes a brake pad 34 suitably bonded to a backing plate 36. Pad assemblies 22 are positioned between the sidewalls of the caliper on opposite sides of brake ring 10a by fastener assemblies 24. Each backing plate 36 includes holes 36a slidably passing fastener assemblies 24 so that brake pad assemblies 22 are mounted for sliding movement between the caliper sidewall on fastener assemblies 24. Opening 32 is of sufficient circumferential and axial extent to allow the brake pad assemblies to pass radially outwardly therethrough.

The ends of caliper 20 define grooves 20a which slidably receive guide pins 38 carried by a fixed portion of the associated vehicle, for example, a torque plate (not shown) secured to the vehicle axle assembly. Further details of the manner in which caliper 20 is slidably mounted on pins 38 are disclosed in US—A—4461372 (published 24.07.84), filed July 17, 1980 and assigned to the Assignee of this application.

Actuator assembly 12 is seen only fragmentarily and includes a tubular housing 40 formed, in the disclosed embodiment, integral with caliper sidewall portion 28 and a tappet 42 slidably positioned in housing 40 and driven, for example, by an air motor (not shown). The free end 42a of tappet 42 extends through an opening 28a in caliper side wall portion 28 and is received in a bridge bar 44 which acts against inboard backing plate 36 to press inboard pad 34 against the inboard face of brake ring 10a and thereafter slide the caliper inboard, or to the left as viewed in Figure 1, to in turn apply outboard pad 34 against the outboard face of brake ring 10a, whereby to brake wheel 18 of the associated vehicle.

The present invention relates particularly to fastener assemblies 24 and, more particularly, to the manner in which fastener assemblies 24 coact with caliper 20 and brake pad assemblies 22 to facilitate removal and replacement of the pad assemblies.

Each fastener assembly 24 includes a washerhead bolt 46, a nut 48, and a cotter pin 50. Each bolt 46 includes a washerhead portion 46a (seen partially broken away in Figure 4), a bolt head portion 46b, a shaft portion 46c, a threaded end portion 46d, and a through cross bore 46e in threaded portion 46b. Each nut 48 is castellated to define a series of grooves 48a. Cotter pins 50 are of known form.

Inboard sidewall portion 28 of caliper 20 defines two throughbores 28b each having a diameter slightly greater than that of bolts 46 to slidably pass the threaded bolt end portions 46d.

Outboard sidewall portion 30 of caliper 20 includes two slots 30a opening at the radially outer circumferential edge 30b of that sidewall and having a width slightly greater than the diameter of bolt shaft portions 46c. The bottom 30c of each slot is formed concentric with, and with the same radius as, bores 28b. The outer face 30d of caliper sidewall portion 30 is counterbored on the axis of each bore 28b to form counterbores 30e and arcuate shoulders 30f. The diameter of counterbores 30e is slightly greater than that of washerhead bolt portions 46a.

In assembled relation, threaded end portions 46d of bolts 46 pass through inboard caliper sidewall portion 28 for threaded engagement with nuts 48; cotter pins 50 pass through grooves 48a in nut 48 and through cross bores 46e to lock nuts 48 on bolts 46; bolt shaft portions 46c pass slidably through backing plate holes 36a to position pad assemblies 22 within caliper opening 32 on opposite sides of brake ring 10a; and bolt washerhead portions 46a are received in counterbores 30e with the inboard faces of the washerheads seated against arcuate shoulders 30f. Thus assembled, bolts 46 mount the brake pad assemblies for sliding brake apply and release movement; the bolts are precluded from axial movement by nuts 48 and washerhead portion 46a; and the bolts are precluded from radial movement by bores 28b and by the entrapment of washerhead portions 46a in counterbores 30e.

To change the brake pad assemblies, cotter pins 50 are pulled, nuts 48 unscrewed, and bolts 46 withdrawn axially to an extent to allow the free ends of threaded bolt portions 46d to clear the inner face 28c of inboard caliper sidewall 28 and allow washerhead portions 46a to clear the outer face 30d at outboard caliper sidewall 30, whereupon bolts 46 may be moved, in assembly with the brake pad assemblies, radially outwardly relative to the caliper with the bolt shaft portions adjacent the bolt heads passing radially outwardly through slots 30a and the remainder of the bolts, together with the brake pad assemblies carried thereby, moving radially outwardly through opening 32 in the caliper. The described arrangement allows the pad assemblies to be removed with limited axial movement of bolts 46. Specifically, complete withdrawal of the fastener bolt, as in prior art designs, would require movement through an axial distance at least as great as the distance between the confronting inner faces of the sidewalls whereas, in the invention design, bolts 46 need only be moved an axial distance sufficient to enable the free ends of the bolts to clear the inner face of the inboard sidewall and this limited amount of axial movement is possible even in situations, as shown, where the wheel of the associated vehicle encroaches on the space around the caliper and severely limits the axial distance that the bolts can be withdrawn. The described arrangement thus provides a ready means of removing and replacing the brake pad assemblies even in environments where complete axial withdrawal of the mounting bolts is precluded by the encroachment of adjacent vehicular structures.

### Claims

1. A disc brake caliper assembly (12) adapted for use with a brake disc (10) secured to a wheel of an associated vehicle; the caliper assembly including a pair of brake pad assemblies (22), a caliper member (20) having axially spaced sidewalls (28, 30) adapted to be positioned on opposite sides of the brake disc (10) and a back wall (26) adapted to circumferentially encircle the periphery (10a) of the brake disc and having an opening therein between the ends of the caliper member (20) of sufficient circumferential and axial extent to allow the brake pad assemblies (22) to pass radially outward therethrough; at least one axially extending elongated fastener member (46) adapted to slidably engage the brake pad assemblies (22) and position them between the sidewalls of the caliper member (20) on opposite sides of the brake disc (10); and fastening means (28b, 30a) on said spaced sidewalls (28, 30) receiving axially spaced portions of said fastener member (46) and including a bore (28b) in one sidewall (28) receiving one portion (46d) of the fastener member (46); said fastening means (28b, 30a) being normally operative to preclude radial movement of said fastener member (46) relative to said caliper member but operative in response to limited axial movement of the fastener member (46) relative to said caliper member (20), relative to said brake pad assemblies (22), and through a distance substantially less than the axial distance between the confronting inner faces of the sidewalls to allow said fastener member (46) to be moved in assembly with the brake pad assemblies (22) supported thereby, radially outwardly relative to the caliper member (20) with the brake pad assemblies moving radially outwardly through the opening in the back wall of the caliper member (20); characterized in that said elongated fastener member (46) includes a washerhead (46a); said fastening means (28b, 30a) include, an axial slot (30a) in the other sidewall (30) receiving another portion (46a, 46b) of the fastener member (46) and opening at the radially outer circumferential edge of the other sidewall (30), and an axial counterbore (30e) in the outer face (30d) of the other sidewall (30) receiving the washerhead portion (46a) of the fastener member (46); said axial slot (30a) having a width slightly greater than that of the elongated fastener member (46c); and whereby the limited axial movement of the fastener member (46) respectively withdraws the one portion (46d) from the bore (28b) and the washerhead (46a) from the counterbore (30e) to allow radially outwardly movement of the fastener member (46) through the slot (30a) to facilitate removal of the brake pad assemblies (22) in assembly with the fastener member (46) through the opening in the back wall of the caliper member (20).

2. The disc brake caliper assembly according to Claim 1 further characterized in that there are two of the elongated fastener members (46) and two of the fastening means (28d, 30a) on the spaced sidewalls (28, 30).

3. The disc brake caliper assembly according to Claim 1 or 2, further characterized in that the one portion (46d) of the fastener member (46) includes means (46d, 48) for securing the fastener member (46) against axial movement relative to the caliper member (20).

4. The disc brake caliper assembly according to Claim 3, further characterized in that the means (46d, 48) for securing the fastener member (46) is threaded means (46d, 48) and the fastener member (46) is a bolt and provides structural support for the sidewalls (28, 30).

5. The disc brake caliper assembly according to Claim 4, further characterized in that the bore (28b) in the one sidewall (20) is a throughbore; the one portion (46d) of the bolt (46) has a threaded section (46d) extending beyond the outer face of the one sidewall (28); and a nut (48) threadably engages the threaded section of the bolt (46) to hold the washerhead (46a) against a shoulder (30f) defined by the difference in diameter of the slot (30a) and the counterbore (30e).

6. The disc brake caliper assembly according to Claim 5 further characterized in that the one sidewall (28) is the inboard sidewall of the caliper member so that the limited axial movement is in an outboard direction and through a distance sufficient to withdraw the bolt (46) from the bore (28d) in the inboard sidewall (28).

## Revendications

1. Ensemble étrier de frein à disque (12) adapté pour être utilisé avec un frein à disque (10) fixé à une roue d'un véhicule correspondant; l'ensemble étrier comprenant une pair de garnitures de frein (22), un élément étrier (20) possédant des parois latérales (28, 30) espacées axialement, adaptées pour être positionnées de part et d'autre du disque de frein (10), et une paroi de dos (26) adaptée pour encercler circonférentiellement la périphérie (10a) du disque de frein et présentant une ouverture comprise entre les extrémités de l'élément étrier (20), possédant des dimensions circonférentielle et axiale suffisantes pour permettre aux ensembles garnitures de frein (22) de passer radialement à travers cette ouverture en se dirigeant vers l'extérieur; au moins un élément de fixation (46) de forme allongée, s'étendant axialement, adapté pour coopérer à coulissement avec les ensembles garnitures de frein (22) et pour les positionner entre les parois latérales de l'élément étrier (20) de part et d'autre du disque de frein (10); et des moyens de fixation (28b, 30a) prévus sur lesdites parois latérales espacées (28, 30) qui reçoivent des parties axialement espacées dudit élément de fixation (46) et comprenant un perçage (28b) prévu dans une première paroi latérale (28) et qui reçoit une partie (46d) de l'organe de fixation (46), lesdits moyens de fixation (28b, 30a) étant normalement capables de faire obstacle au déplacement radial dudit élément de fixation (46) par rapport audit élément étrier mais capables, en réponse à un déplacement axial limité de l'organe de fixation (46) par rapport audit élément étrier (20), par rapport auxdits ensembles garnitures de frein (22) et sur une distance sensiblement inférieure à la distance axiale existant entre les faces internes opposées des parois latérales, de permettre audit organe de fixation (46) de se déplacer conjointement avec les ensembles garnitures de frein (22) supportés par cet organe, radialement vers l'extérieur par rapport à l'élément étrier (20), les ensembles garnitures de frein passant radialement à travers l'ouverture de la paroi de dos de l'élément étrier (20) en se dirigeant vers l'extérieur; caractérisé en ce que ledit organe de fixation (46) de forme allongée comprend une embase (46a); lesdits moyens de fixation (28b, 30a) comprennent une fente axiale (30a) ménagée dans l'autre paroi latérale (30) et qui reçoit une autre partie (46a, 46b) de l'organe de fixation (46) et débouche au niveau du bord circonférentiel radialement extérieur de ladite autre paroi latérale (30), et un contre-alésage axial (30e) ménagé dans la face externe (30d) de ladite autre paroi latérale (30) et qui reçoit la partie embase (46a) de l'organe de fixation (46); ladite fente axiale (30a) possédant une largeur légèrement supérieure à celle de l'élément de fixation (46c) de forme allongée; de telle sorte que le mouvement axial limité de l'organe de fixation (46) extrait respectivement la première partie (46d) de l'organe de fixation du perçage (28b) et l'embase (46a) du contre-alésage (30e), pour permettre de faire passer l'organe de fixation (46) à travers la fente (30a) en se dirigeant radialement vers l'extérieur afin de faciliter la dépose des ensembles garnitures de frein (22) conjointement avec l'organe de fixation (46) à travers l'ouverture de la paroi de dos de l'élément étrier (20).

2. Ensemble étrier de frein à disque selon la revendication 1, caractérisé en outre en ce qu'il y a deux organes de fixation allongés (46) et deux moyens de fixation (28d, 30a) sur les parois latérales espacées (28, 30).

3. Ensemble étrier de frein à disque selon la revendication 1 ou 2, caractérisé en outre en ce que la première partie (46d) de l'organe de fixation (46) comprend des moyens (46d, 48) pour bloquer l'organe de fixation (46) contre tout déplacement axial par rapport à l'élément étrier (20).

4. Ensemble étrier de frein à disque selon la revendication 3, caractérisé en outre en ce que les moyens (46d, 48) servant à fixer l'organe de fixation (46) sont des moyens filetés (46d, 48) et que l'organe de fixation (46) est une vis et donne un appui structural aux parois latérales (28, 30).

5. Ensemble étrier de frein à disque selon la revendication 4, caractérisé en outre en ce que le perçage (28b) ménagé dans la première paroi latérale (20) est un perçage traversant; la première partie (46d) de la vis (46) possède une section filetée (46d) qui se prolonge au-delà de la face externe de la première paroi latérale (28); et un écrou (48) se visse sur la section filetée de la vis (46) pour maintenir l'embase (46a) appliquée contre un épaulement (30f) défini par la différence de diamètre entre la fente (30a) et le contre-alésage (30e).

6. Ensemble étrier de frein à disque selon la revendication 5, caractérisé en ce que la première paroi latérale (28) est la paroi latérale intérieure de l'élément étrier, de sorte que le déplacement axial limité se produit dans le sens allant vers l'extérieur et sur une distance suffisante pour extraire la vis (46) du perçage (28d) formé dans la paroi latérale intérieure (28).

## Patentansprüche

1. Scheibenbremsgreifanordnung (12) zur Verwendung bei einer Bremsscheibe (10) befestigt an einem Rad eines zugehörigen Fahrzeugs, wobei die Greifanordnung folgendes aufweist: ein Paar von Bremskissenanordnungen (22), ein Greifglied (20) mit axial mit Abstand angeordneten Seitenwänden (28, 30) geeignet zur Positionierung auf entgegengesetzten Seiten der Bremsscheibe (10) und einer Rückwand (26) geeignet zur umfangsmäßigen Umfassung des Umfangs (10) der Bremsscheibe und mit einer darinnen vorgesehenen Öffnung zwischen den Enden des Greifglieds (20) von hinreichender umfangsmäßiger und axialer Erstreckung, um zu gestatten, daß die Bremskissenanordnungen (22, 20) radial nach außen da hindurch verlaufen, mindestens ein sich axial erstreckendes, langgestrecktes Befestigungsglied (46) geeignet zum gleitbaren Eingriff mit den Bremskissenanordnungen (22) und zu deren Positionierung zwischen den Seitenwänden des Greifglieds (20) auf entgegengesetzten Seiten der Bremsscheibe (10),

und Befestigungsmittel (28b, 30a) an den mit Abstand angeordneten Seitenwänden (28, 30) zur Aufnahme der mit Axialabstand angeordneten Teile des Befestigungsglieds (46) und mit einer Bohrung (28b) in einer Seitenwand (28) zur Aufnahme eines Teils (46d) des Befestigungsglieds (46),

wobei die Befestigungsmittel (28b, 30a) normalerweise operativ sind, um die Radialbewegung des Befestigungsglieds (46) bezüglich des Greifgliedes auszuschließen, die aber operativ sind infolge der begrenzten Axialbewegung des Befestigungsglieds (46) bezüglich des Greifglieds (20) relativ zu den Bremskissenanordnungen (22), und über einen Abstand hinweg, der wesentlich kleiner ist als der Axialabstand zwischen den konfrontierenden Innenflächen der Seitenwände, um zu gestatten, daß das Befestigungsglied (46) in Anordnung mit den Bremskissenanordnungen (22), die davon getragen sind, bewegt wird, und zwar radial nach außen bezüglich des Greifglieds (20), wobei die Bremskissenanordnungen sich radial nach außen durch die Öffnung in der Rückwand des Greifglieds (20) bewegen, dadurch gekennzeichnet, daß das langgestreckte Befestigungsglied (46) einen Scheibenkopf (46a) aufweist,

daß die Befestigungsmittel (28b, 30a) einen axialen Schlitz (30a) in der äußeren Seitenwand (30) aufweisen, und zwar zur Aufnahme eines weiteren Teils (46a, 46b) des Befestigungsglieds (46) und mit einer Öffnung in der radial äußeren Umfangskante der äußeren Seitenwand (30), und mit einer Axialgegenbohrung (30e) in der Außenfläche (30d) der anderen Seitenwand (30) zur Aufnahme des Scheibenkopfteils (46a) des Befestigungsglieds (46),

wobei der Axialschlitz (30a) eine Breite besitzt, die etwas größer ist als diejenige des langgestreckten Befestigungsglieds (46c),

und wobei die begrenzte Axialbewegung des Befestigungsglieds (46) in entsprechender Weise einen Teil (46b) aus der Bohrung (28b) zieht und den Scheibenkopf (46a) aus der Gegenbohrung (30e), um eine radial nach außen gerichtete Bewegung des Befestigungsglieds (46) durch den Schlitz (30a) zu gestatten, um die Entfernung der Bremskissenanordnungen (22) in der Anordnung mit dem Befestigungsglied (46) durch die Öffnung in der Rückwand des Griefglieds (20) zu erleichtern.

2. Scheibenbremsgreifanordnung nach Anspruch 1, dadurch gekennzeichnet, daß zwei der langgestreckten Befestigungsglieder (46) und zwei der Befestigungsmittel (28d, 30a) auf den mit Abstand angeordneten Seitenwänden (28, 30) vorgesehen sind.

3. Scheibenbremsgreifanordnung nach Anspruch 1 oder 2, dadurch gekennzeichnet, daß ein Teil (46d) des Befestigungsglieds (46) Mittel (46d, 48) aufweist zur Befestigung des Befestigungsglieds (46) gegenüber Axialbewegung relativ zum Greifglied (20).

4. Scheibenbremsgreifanordnung nach Anspruch 3, dadurch gekennzeichnet, daß die Mittel (46d, 48) zur Befestigung des Befestigungsglieds (46) Gewindemittel (46d, 48) sind und daß das Befestigungsglied (46) ein Bolzen ist und die strukturelle Halterung für die Seitenwände (28, 30) vorsieht.

5. Scheibenbremsgreifanordnung nach Anspruch 4, dadurch gekennzeichnet, daß die Bohrung (28b) in der einen Seitenwand (20) eine hindurchverlaufende Bohrung ist, daß ein Teil (46d) des Bolzens (46) einen Gewindeabschnitt (46d) aufweist, der sich über die Außenstirnfläche der einen Seitenwand (28) hinauserstreckt, und daß eine Mutter (48) gewindemäßig mit dem Gewindeabschnitt des Bolzens (46) in Eingriff steht, um den Scheibenkopf (46) gegen eine Schulter (30f) zu halten, und zwar definiert durch die Durchmesserdifferenz des Schlitzes (30a) und der Gegenbohrung (30e).

6. Scheibenbremsgreifanordnung nach Anspruch 5, dadurch gekennzeichnet, daß eine Seitenwand (28) die Innenseitenwand des Greifglieds (20) ist, so daß die begrenzte Axialbewegung in einer Auswärtsrichtung erfolgt, und zwar über einen Abstand hinweg, der ausreicht, um den Bolzen (46) aus der Bohrung (28d) in der innen liegenden Seitenwand (28) herauszuziehen.

0 054 779

FIG.1.

FIG.2.

FIG.3.

FIG.4.

1